## Europäisches Patentamt
## European Patent Office
## Office européen des brevets

(19)

(11) Veröffentlichungsnummer: **0 061 143**
A2

(12)

# EUROPÄISCHE PATENTANMELDUNG

(21) Anmeldenummer: 82102168.0

(22) Anmeldetag: 17.03.82

(51) Int. Cl.³: **B 29 C 25/00**
C 09 J 3/14

(30) Priorität: 20.03.81 DE 3111064

(43) Veröffentlichungstag der Anmeldung:
29.09.82 Patentblatt 82/39

(84) Benannte Vertragsstaaten:
AT BE CH FR GB IT LI NL SE

(71) Anmelder: SIEMENS AKTIENGESELLSCHAFT Berlin
und München
Postfach 22 02 61
D-8000 München 22(DE)

(72) Erfinder: Ney, Ernst, Dr. phil.
Ringstrasse 19
D-8033 Krailling(DE)

(54) Schrumpfbares Material mit einer Beschichtung aus Schmelzkleber.

(57) Die Erfindung betrifft ein schrumpfbares Material (2) mit einer Beschichtung aus Schmelzkleber (1), wobei der Schmelzkleber (1) in seinem molekularen Aufbau vernetzungsresistent gestaltet ist. Dies erlaubt, daß die Kleberbeschichtung bereits vor dem für das schrumpfbare Material (2) notwendigen Vernetzungsprozeß aufgebracht werden kann, ohne daß Haftvermögen des Schmelzklebers (1) Schaden erleidet.

EP 0 061 143 A2

Croydon Printing Company Ltd.

SIEMENS AKTIENGESELLSCHAFT          Unser Zeichen
Berlin und München                  VPA 81 P 6442 E

Schrumpfbares Material mit einer Beschichtung aus
Schmelzkleber

Die Erfindung betrifft ein schrumpfbares Material mit einer Beschichtung aus Schmelzkleber, der aus funktionellen Gruppen und diese verbindenden Kohlenwasserstoffsequenzen aufgebaut ist.

Die einem schrumpfbaren Werkstück innewohnende Befähigung, in der Wärme in einfacher oder mehrfacher Richtung zu schrumpfen, ist in seinem Molekülbau und seiner Vorbehandlung begründet. Die solcher Art sich einstellenden Schrumpfkräfte bedingen nach beendeter Schrumpfung einen gewissen Haftfestsitz des Schrumpfstücks auf seiner Unterlage. Dieser sich durch die Schrumpfung einstellende Haftfestsitz kann in vielen Fällen die Anwender dieser Technik nicht zufriedenstellen, zum Beispiel wenn feuchtigkeitsdichte Abschlüsse gefordert werden. In derartigen Fällen wird vorzugsweise in den Schrumpfspalt zwischen dem Schrumpfstück und dem zu umhüllenden Gegenstand ein Kleber eingebracht, durch den die geforderte Haftung und Abdichtung sichergestellt wird. Doch sind im allgemeinen diese Kleber empfindlich gegen Bestrahlung, wie sie beim Vernetzungsprozeß für das Schrumpfmaterial häufig gebräuchlich ist. Deshalb wurden zum Beispiel schrumpfbare Artikel erst nach dem Vernetzungs- und Aufweitungsverfahren mit einer Einlage aus Schmelzkleber versehen, wie dies zum Beispiel in der DE-OS 14 79 624 beschrieben ist. Dies hat jedoch fertigungstechnische Mängel, da auf solche Weise keine fortlaufende Herstellung eines extrudierten und beschichteten Schrumpfschlauches möglich ist. Es ergab

Sef 1 Phl / 17.3.1981

sich nun für vorliegende Erfindung die Aufgabe, ein schrumpfbares Material mit einer Beschichtung aus Schmelzkleber zu finden, mit dem eine kontinuierliche Endlosfertigung von Schrumpfschläuchen ermöglicht wird, wobei während des Vernetzungsprozesses der bereits aufgebrachte Schmelzkleber keinen Schaden bezüglich seiner Klebefähigkeit erleiden darf. Die Aufgabe wird gemäß vorliegender Erfindung mit einem schrumpfbaren Material und einer Beschichtung aus Schmelzkleber der eingangs beschriebenen Art dadurch gelöst, daß die Kohlenwasserstoffsequenzen des vor dem für das schrumpfbare Material notwendigen Vernetzungsprozeß aufgebrachten Schmelzklebers aus teil- oder mehrfachverzweigten, also mit Seitenketten behafteten Molekülbausteinen aufgebaut sind.

Die in der Schrumpftechnik anzuwendenden Heißkleber entfalten ihre Klebereigenschaften über thermoplastisches Fließen. Diese Eigenschaft geht durch die Vernetzung verloren, so daß zum Beispiel bei co-extrudierten Zweischichtenschläuchen aus einer innen liegenden Kleberschicht und einer Schlauchwandung aus schrumpfbarem Material die Gefahr besteht, daß beim Vernetzungsprozeß der Kleber ebenfalls vernetzt wird und damit seine Klebefähigkeit verliert. Besonders gut eingeführt sind Heißkleber auf Polyamid- oder Polyesterbasis. Sie sind Reaktionsprodukte aus mehrbasischen Karbonsäuren und mehrwertigen Alkoholen bzw. Aminen. Ferner sind Kleber auf der Basis von Äthylen-Vinylazetatcopolymeren bekannt. Diese Substanzen bestehen alle aus an ihren Klassenbezeichnungen erkennbaren funktionellen Gruppen, welche durch Kohlenwasserstoffketten verbunden sind. Die Kohlenwasserstoffsequenzen können erhebliche Längen erreichen und sind verantwortlich für die Vernetzungsbereitschaft der Materialien. Um den Kleber vor der Vernetzung zu bewahren und ihm seine Heißklebefähigkeit zu erhalten, wenn er zum Beispiel als Produkt eines Zweischichtengebildes bei gemeinsamer Extrusion durch eine Vernetzungsanlage geführt wird, wird gemäß der Erfindung vorgeschlagen, seine Kohlenwasserstoffsequenzen aus teil- oder mehrfachverzweigten, das heißt mit Seitenketten behafteten Molekülbausteinen aufzubauen. Vorzugsweise kann dieses durch polymerisierte Propylenanteile oder durch Einbringung von Butylen geschehen, die an jedem zweiten Kohlenstoffatom eine Verzweigung aufweisen. Je nach funktionellen Gruppen ist durch die Häufigkeit der Verzweigungen und durch Variation der Vernetzungsbedingungen auch gegebenenfalls eine erhebliche Verminderung der Seitenkettenzahl möglich, die vernetzungshindernd wirken. Den gleichen Effekt der Strahlenstabilität kann man auch durch Einbau aromatischer Ringsysteme in das Klebermolekül erreichen, wobei auch deren Konzentration von der übrigen Kleberrezeptur und den Vernetzungsbedingungen abhängig ist.

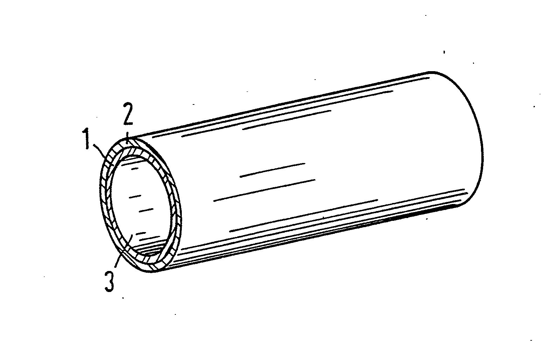

Bei der Verwendung eines derartig aufgebauten Klebers kann die Beschichtung des schrumpfbaren Materials mit diesem Schmelzkleber bereits vor der Vernetzung und Aufweitung erfolgen, da aufgrund des molekularen Aufbaus eine Vernetzung und damit eine Schädigung des Klebeverhaltens nicht mehr auftreten kann. Damit ist es möglich, das Fertigungsverfahren eines mit Schmelzkleber beschichteten Schrumpfschlauches in einem einzigen kontinuierlich ablaufenden Vorgang herzustellen. Es bietet sich dabei ein Extrusionsverfahren an, bei dem gleichzeitig beide Materialien als konzentrisch verlaufende Schläuche co-extrudiert werden, die sofort zu einem Zweischichtenschlauch zusammengeführt werden. Im Anschluß daran kann sich sofort der Vernetzungs- und Aufweitungsvorgang anschließen. Diese Fertigungsweise bietet weiterhin an, den "Zweischichtenschlauch" als solchen aufzutrommeln und solcherart große Längen in einem Zuge zu fertigen. Bei der Montage kann letztendlich jede beliebige Arbeitslänge abgeschnitten und ohne weitere zusätzliche Bearbeitung geschrumpft werden. In der beigefügten Figur ist ein Abschnitt eines Schrumpfschlauches 2 mit einer im Inneren 3 fest aufgebrachten Beschichtung aus Schmelzkleber 1 ersichtlich, der nach dem soeben beschriebenen Verfahren als Zweischichtenschlauch extrudiert wurde. Der Zweischichtenschlauch kann auch in einem hintereinanderliegenden Extrudiervor-gang hergestellt werden.

1 Figur
6 Patentansprüche

Patentansprüche

1. Schrumpfbares Material mit einer Beschichtung aus Schmelzkleber, der aus funktionellen Gruppen und diese verbindenden Kohlenwasserstoffsequenzen aufgebaut ist, d a d u r c h   g e k e n n z e i c h n e t ,   daß die Kohlenwasserstoffsequenzen des vor dem für das schrumpfbare Material notwendigen Vernetzungsprozeß aufgebrachten Schmelzklebers aus teil- oder mehrfach verzweigten, also mit Seitenketten behafteten Molekülbausteinen aufgebaut sind.

2. Schrumpfbares Material nach Anspruch 1,   d a - d u r c h   g e k e n n z e i c h n e t ,   daß die Seitenketten zum Beispiel mittels polymerisierten Propylenanteilen eingebracht sind, die an jedem zweiten Kohlestoffatom eine Verzweigung aufweisen.

3. Schrumpfbares Material nach Anspruch 1,   d a - d u r c h   g e k e n n z e i c h n e t ,   daß die Seitenketten durch Einbringung von Butylen erzeugt werden.

4. Schrumpfbares Material nach Anspruch 1,   d a - d u r c h   g e k e n n z e i c h n e t ,   daß als Molekülbausteine aromatische Ringsysteme eingebaut sind.

5. Verfahren zur Herstellung von schrumpfbarem Material mit einer Beschichtung aus Schmelzkleber nach einem der vorhergehenden Ansprüche,   d a d u r c h   g e - k e n n z e i c h n e t ,   daß die Beschichtung aus Schmelzkleber auf das schrumpfbare Material vor der Vernetzung aufgebracht wird und daß an die Vernetzung anschließend die zum Schrumpfen erforderliche Aufweitung durchgeführt wird.

6. Verfahren zur Herstellung von schrumpfbarem Material mit einer Beschichtung aus Schmelzkleber nach einem der vorhergehenden Ansprüche, d a d u r c h   g e - k e n n z e i c h n e t ,  daß das schrumpfbare Material mit dem Schmelzkleber in einem gleichzeitig ablaufenden Extrudiervorgang oder einem hintereinander angeordneten Extrudiervorgang als Zweischichtenschlauch zusammengefügt wird.